# EUROPEAN PATENT APPLICATION

(11) **EP 0 570 173 A2**
(43) Date of publication of application: **18.11.1993**
(21) Application number: 93303582.6
(22) Date of filing: 10.05.1993
(51) Int. Cl.: C09D 183/08, C09D 183/14, C09D 5/00

(54) **Coating composition containing silylated derivatives of organic amines and epoxides**

(30) Priority: 11.05.1992 US 880925
(71) Applicant: DOW CORNING CORPORATION, Midland Michigan 48686-0994 (US)
(72) Inventor: Cifuentes, Martin Eric, Midland, Michigan (US); Selley, David Brian, Midland, Michigan (US)
(74) Representative: Laredo, Jack Joseph

(57) **Abstract**

A coating composition which is the reaction product of (i) a silane coupling agent having the formula X₃Si(CH₂)ₙY in which n has a value of zero to three, X is a hydrolyzable group on silicon and Y is a reactive organofunctional group and (ii) a polycycloaliphatic amine such as an aminoalkylcyclohexylamine, an aminoaralkylcyclohexylamine and mixtures thereof or a cycloaliphatic epoxide. Optionally, the coating composition may contain a volatile solvent such as a monohydroxy alcohol having from one to six carbon atoms.

## Description

This invention is directed to a coating composition containing a film forming material which is formed by the reaction of an organosilicon compound and certain cycloaliphatic and polycycloaliphatic amines and epoxides. The compositions are capable of forming hard, marring resistant and non-brittle abrasion resistant barriers, as well as protection against corrosion.

Surface coatings represent a large segment of the chemical industry. Typically, such coatings are in the form of viscous liquids containing a film forming substance, a pigment and a volatile solvent. The pigment is omitted where a clear transparent coating is desired. The volatile solvent provides sufficient viscosity in order to enable application of the coating composition to the surface sought to be protected by brush, roller, dipping or spray techniques. The volatile solvent does not normally become a part of the final film. When the liquid coating composition is applied to the surface sought to be protected, the volatile solvent evaporates leaving the film forming substance and the pigment as the residual protective film.

Coatings are applied to surfaces of all types to provide protection against corrosion, oxidative aging, weathering and against mechanical damage or abrasion caused by the movement along the surface sought to be protected of hard particles and protuberances. The prior art is replete with coating compositions containing silanes in one form or another. Exemplary coatings, for example, are described in U.S. Patent No. 4,587,169 issued May 6, 1986, which relates to an abrasion resistant coating; and U.S. Patents 4,642,011 and 4,832,748 issued February 10, 1987 and May 23, 1989 respectively, which are directed to compositions for preventing corrosion. However, the prior art is not believed to teach coating compositions in accordance with the present invention which contain the film forming material mentioned above.

The invention relates to a coating composition for providing protection of a surface against abrasion and corrosion and which contains a silylated derivative of a cycloaliphatic or polycycloaliphatic amine or epoxide. One of the advantages associated with the use of the novel silylated derivatives is that films of the silylated derivatives form a protective barrier by curing at room temperature. Thus, oligomers produced by combining a polycycloaliphatic and a silane coupling agent hydrolyze and condense in moist air to produce protective barriers which possess high levels of hardness and resistance to abrasion and corrosion.

An additional advantage of the present invention resides in the fact that coatings can be produced which demonstrate superior weathering characteristics compared to aromatic analogues.

The invention in its broadest aspect is concerned with a coating composition which is the reaction product of (i) a silane coupling agent having the formula X₃Si(CH₂)ₙY, in which n has a value of zero to three, X is a hydrolyzable group on silicon, and Y is a reactive organofunctional group; and (ii) either a cycloaliphatic or polycycloaliphatic amine selected from aminoalkylcyclo hexylamines, aminoaralkylcyclohexylamines and mixtures thereof or a cycloaliphatic or polycycloaliphatic epoxide.

According to one particular aspect, the invention is concerned with a coating composition comprising the reaction product of (i) a silane coupling agent having the formula X₃Si(CH₂)ₙY, in which n has a value of zero to three, X is a hydrolyzable group on silicon, and Y is a reactive organofunctional group; and (ii) a cycloaliphatic or polycycloaliphatic amine selected from aminoalkylcyclo hexylamines, aminoaralkylcyclohexylamines and mixtures of aminoalkylcyclohexylamines and aminoaralkylcyclohexyl amines.

According to another particular aspect, the invention is concerned with a coating composition comprising the reaction product of (i) a silane coupling agent having the formula X₃Si(CH₂)ₙY, in which n has a value of zero to three, X is a hydrolyzable group on silicon, and Y is a reactive organofunctional group; and (ii) a cycloaliphatic or polycycloaliphatic epoxide.

The silane coupling agent is preferably selected from the group consisting of N-(2-aminoethyl)-3-aminopropyl trimethoxysilane, N-[2-(vinylbenzylamino)ethyl]-3-amino propyltrimethoxysilane, 3-glycidoxypropyltrimethoxysilane, vinyltriacetoxysilane and 2-(3,4-epoxycyclohexyl) ethyltrimethoxysilane.

In particular, when the reactant (ii) for said silane coupling agent is an "amine" as defined above at (i), the "silane coupling agent" is preferably selected from the group consisting of N-(2-aminoethyl)-3-aminopropyltrimethoxysilane, N-[2-(vinylbenzylamino)ethyl)-3-aminopropyltrimethoxysilane, 3-glycidoxypropyltrimethoxysilane, vinyltriacetoxysilane and 2-(3,4-epoxycyclohexyl) ethyltrimethoxysilane.

The above "reaction product" is preferably selected from monosilylated and disilylated derivatives of said silane coupling agent and said cycloaliphatic or polycycloaliphatic amine.

According to a preferred aspect of the invention, the above "amine" is a polycycloaliphatic amine having a formula selected from 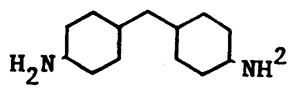 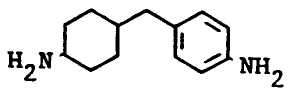 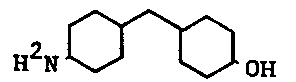 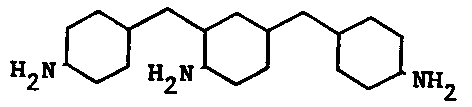 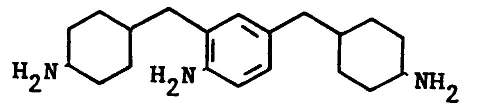 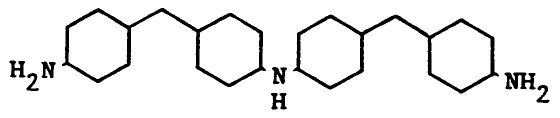 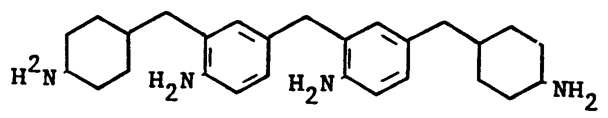
4,4'-methylenebiscyclohexylamine, aminobenzylcyclohexylamine and mixtures of 4,4'-methylenebiscyclohexylamine and aminobenzycyclohexylamine are particularly preferred.

When the reactant (ii) for said silane coupling agent is an epoxide as defined above at (i), said silane coupling agent is preferably selected from the group consisting of N-(2-aminoethyl)-3-aminopropyltrimethoxy silane, N-[2-(vinylbenzylamino)ethyl]-3-aminopropyl trimethoxysilane, 3-glycidoxypropyltrimethoxysilane, aminopropyltrimethoxysilane and aminopropyltriethoxy silane.

The coating composition of the invention may additionally include a liquid silane constituent, represented by the formula R'-Si(OR'')₃, in which R' is an alkyl radical containing two to six carbon atoms or phenyl, and R'' is an alkyl radical containing one or two carbon atoms, said liquid silane constituent being preferably selected from methyltrimethoxysilane, ethyltrimethoxysilane, propyltrimethoxysilane, propyltriethoxysilane, phenyltrimethoxysilane and phenyltriethoxysilane, most preferably phenyltrimethoxysilane.

According to a particularly preferred aspect of the invention, the silane coupling agent is 3-glycidoxypropyltrimethoxysilane.

A preferred composition according to the invention contains 0.1 to 4.0 moles of said silane coupling agent per mole of reactive NH functional group of said cycloaliphatic or polycycloaliphatic amine, 0.5 to 10.0 moles of a liquid silane per mole of reacted NH functional group of said cycloaliphatic or polycycloaliphatic amine, and 0.001 to 10.0 moles of solvent per mole of reacted NH functional group of said cycloaliphatic or polycycloaliphatic amine.

A preferred composition when the reactant (i) is an epoxide contains 0.1 to 10.0 moles of said silane coupling agent per mole of reactive oxirane functional group of said cycloaliphatic or polycycloaliphatic epoxide, 0.1 to 10.0 moles of a liquid silane per mole of reacted oxirane functional group of said cycloaliphatic or polycycloaliphatic epoxide, and 0.001 to 10.0 moles of solvent per mole of reacted oxirane functional group of said cycloaliphatic or polycycloaliphatic epoxide, said cycloaliphatic or polycycloaliphatic epoxide being preferably selected from the group consisting of vinyl cyclohexane dioxide, 2-[3,4-epoxy-cyclohexyl-5,5-spiro 3,4-epoxy] cyclohexane-meta dioxane, bis-[3,4-epoxy cyclohexyl]-adipate, 1,2-epoxy-p-vinylcyclohexene and 3,4 epoxycyclohexylmethyl-3,4-epoxycyclohexanecarboxylate.

The composition of the invention optionally contains a volatile solvent, said solvent being a monohydroxy alochol having from one to twelve carbon atoms.

The invention also covers an article of manufacture comprising a substrate having a coating thereon, said substrate being selected from aluminum surfaces, ferrous substrates, chrome plated ferrous substrates and painted automobile finishes, and said coating being provided by a coating composition as defined above.

The invention further covers an article of manufacture comprising a substrate having coated thereon an abrasion and corrosion resistant film, said film being provided by a coating composition as defined above.

The coating composition of the present invention includes as ingredients a silylated organic amine or epoxide which is a reaction product of a cycloaliphatic amine or epoxide and a silane coupling agent and, optionally, a volatile solvent.

The coating composition may optionally include a liquid silane constituent which functions to enhance the properties of the coating such as the corrosion protection afforded by the coating. Suitable liquid silanes are represented by the formula R'-Si(OR'')₃ in which R' can be an alkyl radical containing two to six carbon atoms or phenyl and R'' can be an alkyl radical containing one or two carbon atoms. Preferred silane enhancers include methyltrimethoxysilane, ethyltrimethoxysilane, propyltrimethoxysilane, propyltriethoxysilane, trifluoropropyltrimethoxysilane, phenyltrimethoxysilane and phenyltriethoxysilane. The most preferred enhancer is phenyltrimethoxysilane.

The volatile solvent or solvent blend includes an alcohol, preferably a monohydroxy alcohol containing up to about twelve, preferably six carbon atoms. Suitable monohydroxy alcohols which may be employed include methyl alcohol, ethyl alcohol, propyl alcohol, isopropyl alcohol, butyl alcohol, isobutyl alcohol, sec-butyl alcohol, tert-butyl alcohol, pentyl alcohol and hexyl alcohol. A preferred solvent in accordance with the present invention is butyl alcohol.

The coating compositions of the present invention possess particular utility when applied to surfaces made of aluminum, ferrous substrates, chrome plated ferrous substrates and painted automobile finishes such as automotive topcoats.

The coating composition in accordance with the present invention includes as one improvement a derivatized organic amine preferably a cycloaliphatic amine. Preferred film formers include silylated derivatives of certain polycycloaliphatic amines including monosilylated and disilylated derivatives of aminoalkylcyclohexylamines and aminoaralkylcyclohexylamines. Polycycloaliphatic amines are known and are commercial products of Air Products and Chemicals, Inc., Allentown Pennsylvania USA. Polycycloaliphatic amine compounds which are preferred in accordance with the present invention are shown as follows:

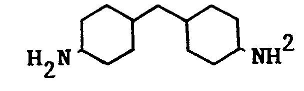

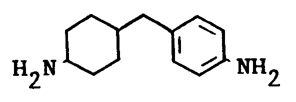

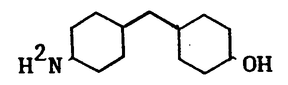

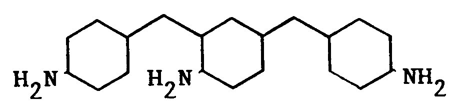

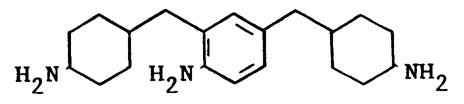

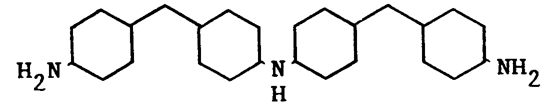

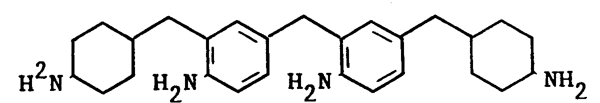

The most preferred of the above listed polycycloaliphatic amines are the first and second compounds which are 4,4'-methylenebiscyclohexylamine and aminobenzylcyclohexylamine, respectively, although other of the listed amines are appropriate for the purposes of the present invention.

The polycycloaliphatic amines are silylated by reacting the amine with an organosilicon compound which can be silane or a siloxane. Alkoxysilanes are the preferred silylating agent. The particular alkoxysilanes employed in accordance with the present invention have been described in the literature as "silane coupling agents".

Silane coupling agents are known in the art as promoters of adhesion as evidenced for example by U.S. Patent No. 4,689,085 issued August 25, 1987. Typically, these materials are employed as an interface between hydrophilic mineral surfaces such as glass and silica and organic resins in order to couple these dissimilar surfaces.

Silane coupling agents are of the general structure X₃Si(CH₂)ₙY in which n is an integer from zero to three, X is a hydrolyzable group on silicon and Y is a reactive organo-functional group such as methacryloxy, epoxy, chloroalkyl, vinyl and amino. When applied from water solutions, the hydrolyzable groups generate intermediate silanols which migrate to the hydrophilic surface where they condense with surface hydroxyl groups to form "siloxane" bonds (-SiOSi-) with the surface. It is believed that coupling is achieved with the organic resin because of the compatibility between the resin and the reactive organofunctional group Y of the silane coupling agent.

Examples of some commercial silane coupling agents are N-(2-aminoethyl)-3-aminopropyltrimethoxysilane; 3-methacryloxypropyltrimethoxysilane; aminopropyltrimethoxysilane, N-[2-(vinylbenzylamino)ethyl]-3-aminopropyltrimethoxysilane; 3-glycidoxypropyltrimethoxysilane; vinyltriacetoxysilane; 3-chloropropyltrimethoxysilane; 2-(3,4-epoxycyclohexyl)-ethyltrimethoxysilane; 3-mercaptopropyltrimethoxysilane; 2-mercaptoethyltrimethoxysilane and aminopropyltriethoxysilane.

The silylated polycycloaliphatic amines are prepared in accordance with the present invention by reacting the amine and the silane coupling agent as depicted in the following reaction scheme: 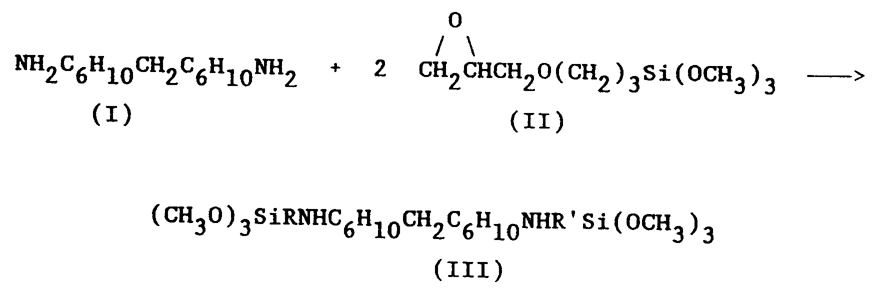
wherein R is -(CH₂)₃OCH₂CH(OH)CH₂- and R' is -CH₂CH(OH)CH₂O(CH₂)₃-.

In the above equation, the reaction product (III) is a silylated polycycloaliphatic amine in accordance with the present invention and is formed by combining the amine (I) which is 4,4'-methylenebiscyclohexylamine and the silane coupling agent (II) which is 3-glycidoxypropyltrimethoxy-silane. Silane coupling agents most preferred for use in accordance with the present invention are 3-methacryloxy-propyltrimethoxysilane, 3-glycidoxypropyltrimethoxysilane and 3-chloropropyltrimethoxysilane.

The following examples are set forth in order to illustrate the present invention in more detail.

### Example I

Approximately 112.4 grams of glycidoxypropyl trimethoxysilane were added to an 8 ounce (236.8 cc) jar containing 50 grams of 4,4'-methylenebiscyclohexylamine and allowed to stir continuously overnight at room temperature (approximately 25°C).

### Example II

Approximately two grams of the fluid described in Example I were poured into an aluminum dish. Within six hours the fluid had crosslinked to form a clear, colorless and tack-free elastomeric film. After 24 hours at room temperature, the film crosslinked to yield a hard clear coating.

### Example III

Approximately 67.4 grams of glycidoxypropyl trimethoxysilane were added to an eight ounce (236.8 cc) jar containing thirty grams of 4,4'-methylenebiscyclohexylamine and allowed to stir continuously overnight at room temperature. Within 24 hours, 28.3 grams of phenyltrimethoxysilane were added to the reactor and the contents were allowed to stir for an additional period of time.

### Example IV

A portion of the fluid described in Example III was diluted to 50% actives in n-butanol. The homogeneous solution was sprayed onto an aluminum panel whose surface had been cleaned with isopropyl alcohol prior to application of the coating solution. Within one hour, the coating had cured to a clear, smooth, tack-free film which showed a significant level of resistance to marring when attempts were made to scratch the coated surface with a fingernail.

### Example V

Coating samples were prepared in accordance with Example IV. The silane coupling agent employed was 3-glycidoxypropyltrimethoxysilane which will be referred hereinafter and in the Tables which follow as "GPTMS". The silylated derivatives of the seven polycycloaliphatic amines shown in the formulas listed above were used to prepare the coating samples. Each coating sample contained one or more of the silylated derivatives diluted to fifty percent actives in n-butanol.

Coating Sample "A" contained the silylated derivative of the polycycloaliphatic amine shown in the first of the seven formulas. This polycycloaliphatic amine is 4,4'-methylenebiscyclohexylamine and will be referred to hereinafter and in the Tables which follow as "MBCHA". Coating Sample "B" contained the silylated derivative of the polycycloaliphatic amine shown in the second of the seven formulas. This polycycloaliphatic amine is aminobenzylcyclohexylamine and will be referred to hereinafter and in the Tables which follow as "ABCHA". Coating Sample "C" contained the silylated derivative of a mixture which included all seven of the polycycloaliphatic amines shown in the above formulas. This mixture of polycycloaliphatic amines had an amine concentration of 9.0 meq/gm and will be referred to hereinafter and in the Tables which follow as "MPCA".

Coating Samples "D", "E" and "F" represent samples containing silylated derivatives of the straight chain aliphatic amines, ethylene diamine, butylene diamine and hexylene diamine, respectively. All coatings were cast from fifty percent active containing solutions in butanol and allowed to stand in excess of sixteen hours at room temperature.

The coating samples were tested for film hardness in accordance with two standard industry tests. The first test was the PENCIL HARDNESS TEST. The second test was the SWARD ROCKER TEST. Each test is described in brief below. The results of evaluations of the coating samples of the present invention in accordance with these tests are shown in Table I.

The PENCIL HARDNESS TEST is a qualitative test to determine the scratch resistance of a coating. A coated panel is placed on a firm horizontal surface. A pencil is held firmly against the coating film at a forty-five degree angle. With the point of the pencil directed away from the operator, the pencil is pushed away from the operator in a one-quarter inch (6.4 mm) stroke. The test is started with the hardest lead pencil and continued down the scale of pencil hardness to the pencil that will not cut into or gouge the coating film. The hardest pencil that will not cut through the film to the underlying surface for a distance of at least one-eighth of an inch (3.2 mm) is reported according to a scale established by the Berol Corporation, Brentwood, Tennessee. The pencil hardness scale is shown below:
6B 5B 4B 3B 2B B HB F H 2H 3H 4H 5H 6H 7H 8H 9H
The softest pencil is 6B and the hardest pencil is 9H.

In the SWARD ROCKER TEST, a rocker is used which consists of two flat four inch (10.2 cm) chromium plated bronze rings spaced one inch (2.54 cm) apart. Amplitudes of oscillation are indicated by two tube-style levels in the lower half of the rocker. The rocker is placed on a level panel having the coated film to be tested and the rocker is set in motion and allowed to oscillate back and forth. The number of swings made by the rocker on the coated film is multiplied by a factor of two and this number value is reported as the value for the SWARD ROCKER HARDNESS. The test has not been standardized by ASTM for measuring the hardness of organic coatings, but the test is widely accepted and used in the coating industry for purposes of hardness evaluations. In Table I, the values for the SWARD ROCKER TEST are the sum of two successive tests performed in each instance. The higher the SWARD ROCKER value, the harder the coating.

**TABLE I**

| FILM HARDNESS FOR SELECTED SILYLATED AMINES | | | | | | |
|---|---|---|---|---|---|---|
| Coating Sample | PENCIL TEST | SWARD TEST | Moles GPTMS | Organic Amine | Moles Amine | Moles PhSi(OMe)3 |
| A | 4H | 98 | 1.47 | MBCHA | 0.732 | - |
| A | 2H | 100 | 1.47 | MBCHA | 0.732 | 1.47 |
| B | 6H | 106 | 2.46 | ABCHA | 1.22 | - |
| B | 4H | 111 | 1.48 | ABCHA | 0.734 | 1.48 |
| C | HB | 46 | 2.88 | MPCA | 2.88 | - |
| C | H | 68 | 1.80 | MPCA | 1.80 | 1.80 |
| D | 5H | 48 | 1.99 | Ethyl | 0.998 | - |
| E | 4H | 46 | 1.82 | Butyl | 0.912 | - |
| F | 4H | 59 | 1.72 | Hexyl | 0.861 | - |

### Example VI

Additional coating samples were prepared and tested in accordance with a third standard industrial test. ASTM D 1654-79A is the Standard Method for Evaluation of Painted or Coated Specimens Subjected to Corrosive Environments. This test was used to show the corrosion protection benefits provided by the coating compositions of the present invention. In accordance with the test, a metal panel coated with a film is cut with a scribing tool so that the tool penetrates the film to the metal surface. The test panel is placed in a SALT SPRAY exposure cabinet and periodically removed in order to determine any creepage of corrosion from the scribe as a function of time. Zero creepage in millimeters is assigned a rating number of ten. Creepage of zero to 0.5 millimeters (1/64th of an inch) is assigned a rating number of nine. Creepage of 0.5 to 1.0 millimeters (1/64th to 1/32nd of an inch) is assigned a rating number of eight. The scale progresses to a rating number of zero for creepage of over sixteen millimeters (5/8ths of an inch). Thus, the higher the rating number the more resistant the coating film is to corrosion.

The coating samples were prepared in accordance with Example V and cast onto aluminum panels. Six samples were tested, each sample being subjected to two separate runs. Each of the samples contained as the film former, a silylated derivative of a polycycloaliphatic amine which was a reaction product of the silane coupling agent 3-glycidoxypropyltrimethoxysilane referred to as "GPTMS", with either (i) the polycycloaliphatic amine 4,4'-methylenebiscyclohexylamine referred to as "MBCHA"; (ii) the polycycloaliphatic amine aminobenzylcyclohexylamine referred to as "ABCHA"; or (iii) the mixture of polycycloaliphatic amines referred to as "MPCA". The particular reaction product used as the film former in each sample is shown below in Table II. The reaction product in coating samples A-F was was formed in accordance with the procedures set forth above in Examples I, III and V.

**TABLE II**

| Coating Sample | Grams GPTMS | Organic Amine | Grams Amine | Grams PhSi(OMe)3 | Grams n-butanol |
|---|---|---|---|---|---|
| A | 58.15 | ABCHA | 25.00 | - | 83.15 |
| B | 34.90 | ABCHA | 15.00 | 29.30 | 79.14 |
| C | 34.63 | MBCHA | 15.40 | - | 50.00 |
| D | 34.62 | MBCHA | 15.40 | 29.06 | 79.00 |
| E | 68.06 | MPCA | 32.01 | - | 100.06 |
| F | 42.54 | MPCA | 20.01 | 35.61 | 98.15 |

Coating samples A-F shown in Table II were evaluated in accordance with the SALT SPRAY test described above and the results of these tests are shown below in Tables III-V. In the SALT SPRAY test, aluminum panels were coated with the test samples. It is evident from a consideration of Tables III-V, that the coated aluminum panels tested surpassed two-thousand hours without failure. These tests further confirm the unexpected discovery that the presence in the coating sample of the silane compound phenyltrimethoxysilane PhSiO(OMe)₃ enhanced the corrosion inhibition of the protective barrier provided by coating samples containing this silane material. This beneficial effect is particularly pronounced in Table V where the mixed polycycloaliphatic amine MPCA was employed, although it is evident in Tables III and IV.

**TABLE III**

| SALT SPRAY EVALUATIONS | | | | | | |
|---|---|---|---|---|---|---|
| Ratings Following Hours of Exposure | | | | | | |
| Coating Sample | 127 | 461 | 659 | 851 | 1162 | 1544 |
| A | 10 | 10 | 10 | 10 | 10 | 9 |
| A | 10 | 10 | 10 | 10 | 10 | 9 |
| B | 10 | 10 | 10 | 10 | 10 | 9 |
| B | 10 | 10 | 10 | 10 | 10 | 9 |

**TABLE IV**

| SALT SPRAY EVALUATIONS | | | | | | | | |
|---|---|---|---|---|---|---|---|---|
| Ratings Following Hours of Exposure | | | | | | | | |
| Coating Sample | 170 | 344 | 591 | 925 | 1123 | 1315 | 1626 | 2008 |
| C | 10 | 10 | 10 | 9 | 9 | 8 | 7 | 7 |
| C | 10 | 9 | 8 | 8 | -- | 9 | 8 | 8 |
| D | 10 | 10 | 10 | 10 | 10 | 10 | 10 | 9 |
| D | 10 | 10 | 10 | 10 | 10 | 10 | 10 | 9 |

**TABLE V**

| SALT SPRAY EVALUATIONS | | | |
|---|---|---|---|
| Ratings Following Hours of Exposure | | | |
| Coating Sample | 390 | 701 | 1422 |
| E | 5 | 5 | 4 |
| E | 4 | 4 | 4 |
| F | 10 | 10 | 9 |
| F | 10 | 10 | 9 |

### Example VII

A set of heavily rusted, chrome-plated, 'baby moon' hubcaps were restored according to the following procedure. Oxidation was removed from the corroded surface using a commercially available, abrasive-containing, polish. A coating solution, approximately 50% actives in n-butanol, was applied by hand to the cleaned surface using a clean cotton cloth. The actives in the coating solution were a blend of phenyltrimethoxysilane and an alkoxysilylated cycloaliphatic amine. The treatment was permitted to dry at room temperature and the hubcaps were re-installed on the automobile. The treated hubcaps were examined after approximately four months of service. No signs of corrosion were observed even in areas which were heavily pitted prior to treatment. Re-examination of the coated surface after nearly a year of service revealed that minor points of corrosion were visible in some of the previously pitted regions. No evidence of corrosion was observed in areas which had not been previously damaged.

The film former of the present invention may also be produced by reacting a silane coupling agent with a cycloaliphatic or a polycycloaliphatic epoxide. These compounds are known in the art and are commercially available from the Union Carbide Chemicals and Plastics Company Inc., Danbury, Connecticut. Representative cycloaliphatic and polycycloaliphatic epoxides are vinyl cyclohexene dioxide, 2-[3,4-epoxycyclohexyl-5,5-spiro-3,4-epoxy] cyclohexane-meta dioxane, bis-[3,4-epoxycyclohexyl] adipate, 1,2-epoxy-p-vinylcyclohexene and 3,4-epoxycyclohexylmethyl-3,4-epoxycyclohexane-carboxylate.

The coating compositions of the present invention are prepared by combining the various ingredients in the following amounts. In the case of the cycloaliphatic amine, there is employed 0.1 to 4.0 moles of the silane coupling agent per mole of reactive NH functional group of the cycloaliphatic amine. Preferably, there is employed 0.25 to 2.0 moles of the silane coupling agent per mole of reactive NH functional group of the cycloaliphatic amine. Most preferred is 0.4 to 1.0 mole of the silane coupling agent per mole of reactive NH functional group of the cycloaliphatic amine.

The optional liquid silane constituent which functions to enhance the coating properties is employed in the amount of 0.0 to 10.0 moles of the optional liquid silane enhancer per mole of reacted NH functional group of the cycloaliphatic amine. Preferably, there is employed 0.5 to 4.0 moles of the optional liquid silane enhancer per mole of reacted NH functional group of the cycloaliphatic amine. Most preferred is 0.8 to 2.0 moles of the optional liquid silane enhancer per mole of reacted NH functional group of the cycloaliphatic amine.

Regarding the solvent, there is employed 0.001 to 10.0 moles of the solvent per mole of reacted NH functional group of the cycloaliphatic amine. Preferably, there is employed 0.5 to 4.0 moles of the solvent per mole of reacted NH functional group of the cycloaliphatic amine. Most preferred is 0.8 to 2.0 moles of the solvent per mole of reacted NH functional group of the cycloaliphatic amine.

Where the film former is a reaction product of a silane coupling agent and a cycloaliphatic epoxide, the coating compositions of the present invention are prepared by combining 0.01 to 10.0 moles of the silane coupling agent per mole of reactive oxirane functional group of the cycloaliphatic epoxide. Preferably, there is employed 0.10 to 3.5 moles of the silane coupling agent per mole of reactive oxirane functional group of the cycloaliphatic epoxide. Most preferred is 0.5 to 1.5 moles of the silane coupling agent per mole of reactive oxirane functional group of the cycloaliphatic epoxide.

The optional liquid silane constituent which functions to enhance the coating properties is employed in the amount of 0.0 to 10.0 moles of the optional liquid silane enhancer per mole of reacted oxirane functional group of the cycloaliphatic epoxide. Preferably, there is employed 0.1 to 4.0 moles of the optional liquid silane enhancer per mole of reacted oxirane functional group of the cycloaliphatic epoxide. Most preferred is 0.5 to 2.0 moles of the optional liquid silane enhancer per mole of reacted oxirane functional group of the cycloaliphatic epoxide.

Regarding the solvent, there is employed 0.001 to 10.0 moles of the solvent per mole of reacted oxirane functional group of the cycloaliphatic amine. Preferably, there is employed 0.5 to 4.0 moles of the solvent per mole of reacted oxirane functional group of the cycloaliphatic epoxide. Most preferred is 0.8 to 2.0 moles of the solvent per mole of reacted oxirane functional group of the cycloaliphatic epoxide.

It will be apparent from the foregoing that many other variations and modifications may be made in the compounds, compositions, structures and methods described herein without departing substantially from the essential features and concepts of the present invention. Accordingly, it should be clearly understood that the forms of the invention described herein are exemplary only and are not intended as limitations on the scope of the present invention as defined in the appended claims.

## Claims

1. A coating composition which is the reaction product of (i) a silane coupling agent having the formula X₃Si(CH₂)ₙY, in which n has a value of zero to three, X is a hydrolyzable group on silicon, and Y is a reactive organofunctional group; and (ii) either a cycloaliphatic or polycycloaliphatic amine selected from aminoalkylcyclohexylamines, aminoaralkylcyclohexylamines and mixtures thereof or a cycloaliphatic or polycycloaliphatic epoxide.

2. A coating composition comprising the reaction product of (i) a silane coupling agent having the formula X₃Si(CH₂)ₙY, in which n has a value of zero to three, X is a hydrolyzable group on silicon, and Y is a reactive organofunctional group; and (ii) a cycloaliphatic or polycycloaliphatic amine selected from aminoalkylcyclohexylamines, aminoaralkylcyclohexylamines and mixtures of aminoalkylcyclohexylamines and aminoaralkylcyclohexylamines.

3. A coating composition comprising the reaction product of (i) a silane coupling agent having the formula X₃Si(CH₂)ₙY, in which n has a value of zero to three, X is a hydrolyzable group on silicon, and Y is a reactive organofunctional group; and (ii) a cycloaliphatic or polycycloaliphatic epoxide.

4. A composition according to any of claims 1 to 3, in which said silane coupling agent is selected from the group consisting of N-(2-aminoethyl)-3-aminopropyltrimethoxysilane, N-[2-(vinylbenzylamino)ethyl-3-aminopropyltrimethoxysilane, 3-glycidoxypropyltrimethoxysilane, vinyltriacetoxysilane and 2-(3,4-epoxycyclohexyl)ethyltrimethoxysilane.

5. A composition according to claim 2, in which said silane coupling agent is selected from the group consisting of N-(2-aminoethyl)-3-aminopropyltrimethoxysilane, N-[2-(vinylbenzylamino)ethyl]-3-aminopropyltrimethoxysilane, 3-glycidoxypropyl-trimethoxysilane, vinyltriacetoxysilane and 2-(3,4-epoxycyclohexyl)ethyltrimethoxysilane.

6. A composition according to claim 1, in which said reaction product is selected from monosilylated and disilylated derivatives of said silane coupling agent and said cycloaliphatic or polycycloaliphatic amine.

7. A composition according to claim 1, in which said amine is a polycycloaliphatic amine having a formula selected from

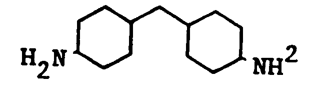

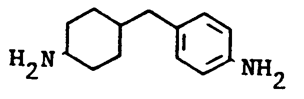

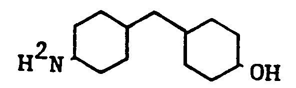

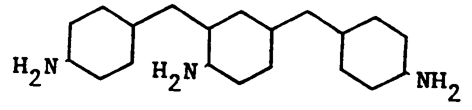

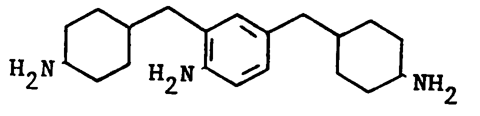

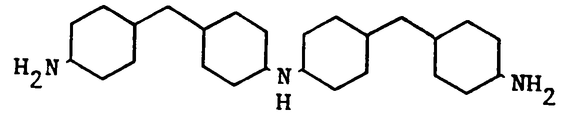

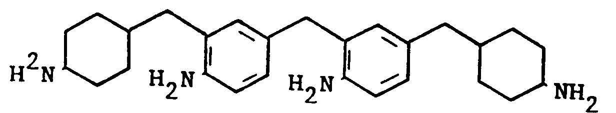

8. A composition according to claim 7, in which said polycycloaliphatic amine is 4,4'-methylenebiscyclohexylamine.

9. A composition according to claim 7, in which said polycycloaliphatic amine is aminobenzylcyclohexylamine.

10. A composition according to claim 7, in which said polycycloaliphatic amine is a mixture which includes 4,4'-methylenebiscyclohexylamine and aminobenzycyclohexylamine.

11. A composition according to claim 3, in which said silane coupling agent is selected from the group consisting of N-(2-aminoethyl)-3-aminopropyltrimethoxysilane, N-[2-(vinylbenzylamino)ethyl]-3-aminopropyltrimethoxysilane, 3-glycidoxypropyltrimethoxysilane, aminopropyltrimethoxysilane and aminopropyltriethoxysilane.

12. A composition according to claim 1, which additionally includes a liquid silane constituent, said liquid silane constituent being represented by the formula R'-Si(OR'')₃, in which R' is an alkyl radical containing two to six carbon atoms or phenyl, and R'' is an alkyl radical containing one or two carbon atoms.

13. A composition according to claim 12, in which said liquid silane constituent is selected from methyltrimethoxysilane, ethyltrimethoxysilane, propyltrimethoxysilane, propyltriethoxysilane, phenyltrimethoxysilane and phenyltriethoxysilane.

14. A composition according to claim 13, in which said liquid silane constituent is phenyltrimethoxysilane.

15. A composition according to claim 1, in which said silane coupling agent is 3-glycidoxypropyltrimethoxysilane.

16. A composition according to claim 2, which contains 0.1 to 4.0 moles of said silane coupling agent per mole of reactive NH functional group of said cycloaliphatic or polycycloaliphatic amine, 0.5 to 10.0 moles of a liquid silane per mole of reacted NH functional group of said cycloaliphatic or polycycloaliphatic amine, and 0.001 to 10.0 moles of solvent per mole of reacted NH functional group of said cycloaliphatic or polycycloaliphatic amine.

17. A composition according to claim 3, which contains 0.1 to 10.0 moles of said silane coupling agent per mole of reactive oxirane functional group of said cycloaliphatic or polycycloaliphatic epoxide, 0.1 to 10.0 moles of a liquid silane per mole of reacted oxirane functional group of said cycloaliphatic or polycycloaliphatic epoxide, and 0.001 to 10.0 moles of solvent per mole of reacted oxirane functional group of said cycloaliphatic or polycycloaliphatic epoxide.

18. A composition according to claim 17, in which said cycloaliphatic or polycycloaliphatic epoxide is a compound selected from the group consisting of vinyl cyclohexane dioxide, 2-[3,4-epoxy-cyclohexyl-5,5-spiro-3,4-epoxy] cyclohexane-meta dioxane, bis-[3,4-epoxycyclohexyl] -adipate, 1,2-epoxy-p-vinylcyclohexene and 3,4-epoxycyclohexylmethyl-3,4-epoxycyclohexanecarboxylate.

19. A composition according to claim 1, which contains a volatile solvent, said solvent being a monohydroxy alochol having from one to twelve carbon atoms.

20. An article of manufacture comprising a substrate having a coating thereon, said substrate being selected from aluminum surfaces, ferrous substrates, chrome plated ferrous substrates and painted automobile finishes, and said coating being provided by a coating composition according to any of claims 1 - 19.

21. An article of manufacture comprising a substrate having coated thereon an abrasion and corrosion resistant film, said film being provided by a coating composition according to any of claims 1-19.
